# EUROPEAN PATENT SPECIFICATION

(11) **EP 0 447 107 B1**
(45) Date of publication and mention of the grant of the patent: **19.10.1994**
(21) Application number: 91301836.2
(22) Date of filing: 06.03.1991
(51) Int. Cl.: A01D 65/00

(54) **Crop lifting apparatus**
Erntehebegerät
Appareil de relevage de végétation

(30) Priority: 07.03.1990 GB 9005133
(43) Date of publication of application: 18.09.1991
(73) Proprietor: J.C. ELLIS LIMITED, Bulwell, Nottingham NG6 8NX (GB)
(72) Inventor: Orton-Johnson, Neale, Nr. Stamford, Lincolnshire (GB)
(74) Representative: Swindell & Pearson

(56) References cited:
- EP-A- 0 126 683
- AU-A- 423 886
- AU-A- 425 090
- US-A- 2 294 646

## Description

This invention relates to apparatus for lifting crops off the ground for harvesting, and is particularly concerned with apparatus adapted to be mounted on a harvesting machine.

Because of the way in which they grow close to the ground, some crops are more difficult to harvest than others, and also weather conditions can cause harvesting problems.

Specification No. EP-A-0 126 683 discloses crop lifting apparatus.

It is an object of the present invention to provide an improved crop lifting apparatus relative to those presently forming the state of the art.

Apparatus for lifting crops off the ground for harvesting, the apparatus comprising means for mounting same on a harvesting machine, lifting means located at one end of a first support member and arranged to be movable over the ground, a second support member fixed in position relative to the mounting means, and resilient means biassing said one end of the first support member away from the second support member, whereby the lifting means can be deflected upon engagement thereof with uneven ground or a ground obstruction, the first support member being slidably located within the second support member with the lifting means externally of the latter, characterised in that the respective profiles of the first and second support members are such as to constrain same against relative rotation, and means are located within the second support member for preventing separation of the first support member therefrom.

Preferably the lifting means is movably mounted on said one end of the first support member, for example by way of a pivotal arrangement.

Preferably also the second support member is of tubular form with rectangular cross-section, while the first support member is also of tubular form having a smaller rectangular cross-section than the second support member to enable slidable location therein. The second support member is preferably secured to the mounting means so that when the latter is positioned on a harvesting machine, the second support member, and thereby the first support member, has an inclined orientation relative to the ground.

The biassing means may comprise a compression spring located within the second support member and extending between one end of the latter and the other end of the first support member. The separation preventing means may comprise a rod extending along part of the length of the second support means and providing an abutment, the first support means providing a closure plate at said other end thereof through which the rod is located, whereby engagement between the closure plate and the abutment prevents separation.

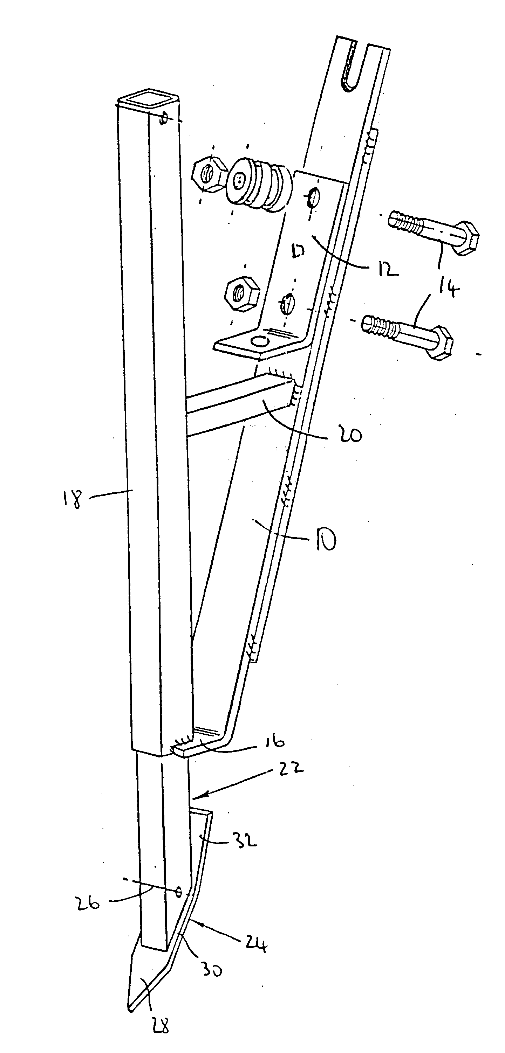

An embodiment of the present invention will now be described by way of example only with reference to the single figure of the accompanying drawing which is a perspective view of a crop lifting apparatus according to the invention.

Referring to the drawing a crop lifting apparatus comprises a bar 10 having, towards one end, a conventional mounting arrangement for connecting the apparatus to a harvesting machine, the arrangement including a clamping bracket 12 and locking bolts 14. The arrangement provides for the bar 10 being located in use in a substantially horizontal orientation above the ground.

At the other end, the bar 10 has an upturned part 16 forming an angle of greater than 90° with the remaining part of the bar 10. In an appropriate cut out of the part 16 there is welded thereto, one end of an elongate tubular outer support member 18, whereby the member 18 in use will extend generally above the bar 10 but at an angle relative thereto. A brace 20 extends between the bar 10 and the support member 18.

An elongate inner support member 22 is provided to slidably locate within the support member 18 through the open end thereof connected to the part 16 of the bar 10. Within the support member 18 a biassing arrangement, for example in the form of a compression spring, extends between the end of the inner support member 22 and the other end of the outer support member 18, being retained at said other end internally of the member 18 by any suitable means. Also within the outer support member 18 there is provided a rod (not shown) extending from adjacent to the other end thereof partway along the length of the support member 18. The rod is releasably retained in the member 18 by a removable cross pin, and has an abutment on its inner end. Across the inner end of the support member 22 extends a closure plate having a central through aperture through which the rod, but not the abutment, can locate. To construct the assembly, the rod is located through the outer end of the support member 22 and through the apertured cover plate, before being retained at the other end of the member 18 with the abutment internally of the member 22. Thereby the inner end of the latter cannot move past the interior stop and the inner support member 22 is thus prevented from separating from the outer support member 18.

The outer end face of the inner support member 22 is angled relative to a longitudinal axis of the latter. Crop lifting means in the form of a shoe 24 is pivotally mounted adjacent the outer end of the support member 22 on a pivot axis 26 and has a front pointed end 28, a planar central body part 30 and an upturned rear end part 32. In the normal use position as shown in the drawing, the body part 30 lies against the angled end face of the support member 22 so as to be substantially horizontal for movement across the ground. The pointed end 28 facilitates penetration of the shoe beneath the crops to be lifted.

With the inner and outer support members 22, 18 being of rectangular, for example square, cross section, relative rotation is prevented without the use of any additional component and this facilitates manufacture. Further, the interior stop arrangement can be of very simple construction and again has significant advantages over other designs of stop arrangements already known. The pivotally mounted shoe also enhances the ability of the apparatus to follow ground variations, in addition to the movement of the inner support member into the outer support member against the biassing spring. Even more advantageously, the mounting of the shoe enables the removal thereof and easy replacement when the shoe becomes worn. It should be appreciated that the shoe is subject to wear by virtue of its contact with the ground.

Various modifications may be made without departing from the invention.

## Claims

1. Apparatus for lifting crops off the ground for harvesting, the apparatus comprising means (12,14) for mounting same on a harvesting machine, lifting means (24) located at one end of a first support member (22) and arranged to be movable over the ground, a second support member (18) fixed in position relative to the mounting means (12,14), and resilient means biassing said one end of the first support member (22) away from the second support member (18), whereby the lifting means (24) can be deflected upon engagement thereof with uneven ground or a ground obstruction, the first support member (22) being slidably located within the second support member (18) with the lifting means (24) externally of the latter, characterised in that the respective profiles of the first and second support members (22, 18) are such as to constrain same against relative rotation, and means are located within the second support member (18) for preventing separation of the first support member (22) therefrom.

2. Apparatus according to Claim 1, characterised in that the lifting means (24) is movably mounted on said one end of the first support member (22).

3. Apparatus according to Claim 2, characterised in that the lifting means (24) is movably mounted by way of a pivotal arrangement.

4. Apparatus according to any of Claims 1 to 3, characterised in that the second support member (18) is of tubular form with rectangular cross-section, while the first support member (22) is also of tubular form having a smaller rectangular cross-section than the second support member (18) to enable slidable location therein.

5. Apparatus according to any of the preceding Claims, characterised in that the second support member (18) is secured to the mounting means (12, 14) so that when the latter is positioned on a harvesting machine, the second support member (18), and thereby the first support member (22), has an inclined orientation relative to the ground.

6. Apparatus according to any of the preceding Claims, characterised in that the biassing means comprises a compression spring located within the second support member (18) and extending between one end of the latter and the other end of the first support member (22).

7. Apparatus according to any of the preceding Claims, characterised in that the separation preventing means comprises a rod extending along part of the length of the second support means (18) and providing an abutment, the first support means (22) providing a closure plate at said other end thereof through which the rod is located, whereby engagement between the closure plate and the abutment prevents separation.

8. Apparatus according to Claim 7, characterised in that the rod is releasably retained in the second support means (18).

9. Apparatus according to Claim 8, characterised in that the rod is retained by a cross pin removably mounted on the second support means.

## Patentansprüche

1. Vorrichtung zum Anheben von Feldfrüchten vom Boden zu deren Ernte, wobei die Vorrichtung folgendes umfaßt: Mittel (12;14) zur Montage derselben an einer Erntemaschine, Anhebemittel (24), die an einem Ende eines ersten Trageelements (22) angebracht und Über dem Boden bewegbar angeordnet sind, ein relativ zu dem Befestigungsmittel (12;14) fixiertes, zweites Trageelement (18) und elastische Mittel, die das besagte eine, vom zweiten Trageelement (18) entfernte Ende des ersten Trageelements (22) vorspannen, wodurch das Anhebemittel (24) auf seinen Eingriff mit unebenem Grund oder einem Bodenhindernis hin ausgelenkt werden kann, wobei das erste Trageelement (22) im zweiten Trageelement (18) Verschiebbar angeordnet ist und das Anhebemittel (24) außerhalb des letzteren ist,
**dadurch gekennzeichnet, daß**
die jeweiligen Querschnitte des ersten und zweiten Trageelements (22,18) selbige gegen relative Drehung sichern und Mittel im zweiten Trageelement (18) angeordnet sind, die die Trennung des ersten Trageelements (22) davon verhindern.

2. Vorrichtung, nach Anspruch 1,
**dadurch gekennzeichnet, daß** das Anhebemittel (24) an besagtem einen Ende des ersten Trageelements beweglich angeordnet ist.

3. Vorrichtung nach Anspruch 2,
**dadurch gekennzeichnet, daß** das Anhebemittel (24) durch eine drehbare Anordnung beweglich montiert ist.

4. Vorrichtung nach einem der Ansprüche 1 bis 3,
**dadurch gekennzeichnet, daß** das zweite Trageelement (18) rohrförmig mit rechtwinkligem Querschnitt ist, während das ebenfalls rohrförmige erste Transportmittel (22) einen kleineren, rechteckigen Querschnitt als das zweite, Trageelement (18) aufweist, um verschiebbare Anordnung darin zu ermöglichen.

5. Vorrichtung nach einem der vorhergehenden Ansprüche,
**dadurch gekennzeichnet, daß** das zweite Trageelement (18) am Befestigungsmittel (12,14) gesichert ist, sodaß, wenn letzteres an einer Erntemaschine angeordnet ist, das zweite Trageelement (18) und dadurch das erste Trageelement (22) eine relativ zum Boden geneigte Orientierung haben.

6. Vorrichtung nach einem der vorhergehenden Ansprüche,
**dadurch gekennzeichnet, daß** das Vorspannmittel eine Vorspannfeder umfaßt, die im zweiten Trageelement (18) angeordnet ist und die sich zwischen einem Ende des letzteren und dem anderen Ende des ersten Trageelements erstreckt.

7. Vorrichtung nach einem der vorhergehenden Ansprüche,
**dadurch gekennzeichnet, daß** das die Trennung verhindernde Mittel eine Stange umfaßt, die sich Über einen Teil der Länge des zweiten Trageelements (18) erstreckt und einen Anschlag umfaßt, während das erste Trageelement (22) an seinem besagten anderen Ende eine Verschlußplatte aufweist, durch welche die Stange hindurchgeht, wodurch der Eingriff zwischen dar Verschlußplatte und dem Anschlag die Trennung verhindert.

8. Vorrichtung nach Anspruch 7,
**dadurch gekennzeichnet, daß** die Stange lösbar im zweiten Trageelement (18) festgehalten wird.

9. Vorrichtung nach Anspruch 8,
**dadurch gekennzeichnet, daß** die Stange durch einen Querbolzen festgehalten wird, der herausziehbar am zweiten Trageelement montiert ist.

## Revendications

1. Dispositif de ramassage de cultures du sol en vue d'une moisson, l'appareil comprenant des moyens (12, 14) servant à monter ce dernier sur une moissonneuse, un moyen de levage (24), situé à une extrémité d'un premier organe de support (22) et agencé de façon à pouvoir être déplacé sur le sol, un deuxième organe de support (18) fixé en place par rapport aux moyens de montage (12, 14) et un moyen élastique, déplaçant ladite première extrémité dudit premier organe de support (22) de façon à l'éloigner du deuxième organe de support (18), de manière à que le moyen de levage (24) puisse dévié avec lors de son contact avec un sol irrégulier ou un obstacle placé au sol, le premier organe de support (22) étant monté coulissant dans le deuxième organe de support (18), avec le moyen de levage (24) situé à l'extérieur de ce dernier, caractérisé en ce que les profils respectifs des premier et deuxième organes de supports (22, 18) sont tels, qu'ils empêchent ces derniers d'effectuer une rotation relative, et en ce que des moyens sont placés dans le deuxième organe de support (18) afin d'empêcher la séparation du premier organe du support (22) par rapport à ce dernier.

2. Dispositif selon la revendication 1, caractérisé ce que le moyen de levage (24) est monté déplaçable sur ladite première extrémité du premier organe de support (22).

3. Dispositif selon la revendication 2, caractérisé en ce que le moyen de levage (24) est monté déplaçable au moyen d'un agencement pivotant.

4. Dispositif selon l'une quelconque des revendications 1 à 3, caractérisé en ce que le deuxième organe de support (18) est de forme tubulaire avec une section transversale rectangulaire, tandis que le premier organe de support (22) est également de forme tubulaire, ayant une section transversale rectangulaire plus petite que celle du deuxième organe de support (18), afin de permettre une disposition coulissante en son sein.

5. Dispositif selon l'une quelconque des revendications précédentes, caractérisé en ce que le deuxième organe de support (18) est fixé aux moyens de montage (12, 14), de manière que, lorsque ces derniers sont disposés sur une moissonneuse, le deuxième organe de support (18) et, de ce fait, le premier organe de support (22) présentent une orientation inclinée par rapport au sol.

6. Appareil selon l'une quelconque des revendications précédentes, caractérisé en ce que le moyen de déplacement comprend un ressort de pression, situé dans le deuxième organe de support (18) et s'étendant entre une extrémité de ce dernier et l'autre extrémité du premier organe de support (22).

7. Appareil selon l'une quelconque des revendications précédentes, caractérisé en ce que le moyen d'empêchement de séparation comprend une tige s'étendant le long d'une partie de la longueur du deuxième organe de support (18) et formant une butée, le premier organe de support (22) comprenant une plaque de fermeture à sa dite autre extrémité travers de laquelle la tige est positionnée, de manière à ce qu'Un engagement entre la plaque de fermeture et la butée empêche toute séparation.

8. Appareil selon la revendication 7, caractérisé en ce que la tige est maintenue amovible dans le deuxième organe de support 18.

9. Dispositif selon la revendication 8, caractérisé en ce que la tige est maintenue par une tige transversale, montée amovible sur le deuxième organe de support.
